# FASCICULE DE BREVET EUROPEEN

(11) **EP 2 576 483 B1**
(45) Date de publication et mention de la délivrance du brevet: **02.07.2014**
(21) Numéro de dépôt: 11725136.3
(22) Date de dépôt: 09.05.2011
(51) Int. Cl.: C04B 41/72, B24C 1/00

(54) **PROCÉDÉ DE DÉCAPAGE OU D'ÉCROÛTAGE D'UNE SURFACE EN BÉTON**
VERFAHREN ZUM ABSCHABEN ODER ABSCHÄLEN EINER BETONFLÄCHE
PROCESS FOR SCRAPING OR PEELING A CONCRETE SURFACE

(30) Priorité: 03.06.2010 FR 1054345
(43) Date de publication de la demande: 10.04.2013
(73) Titulaire: L'Air Liquide Société Anonyme pour l'Etude et l'Exploitation des Procédés Georges Claude, 75007 Paris (FR)
(72) Inventeur: QUINTARD, Jacques, F-95590 Presles (FR); RICHARD, Frédéric, F-95620 Parmain (FR); TRUCHOT, Charles, F - 44600 Saint Nazaire (FR)
(74) Mandataire: Pittis, Olivier
(86) Numéro de dépôt international: PCT/FR2011/051037
(87) Numéro de publication internationale: WO 2011/151550

(56) Documents cités:
- US-A1- 2006 053 165

## Description

L'invention porte sur un procédé de décapage ou d'écroûtage d'une surface en béton par mise en oeuvre d'un ou plusieurs jets d'azote à température cryogénique à haute pression, en particulier de l'azote liquide sous pression.

Il est connu du document US 2006/0053165 A1 de pouvoir utiliser un ou des jets d'azote liquide pour décaper ou écroûter certaines surfaces ou revêtements. Lors d'une telle opération, trois effets de chaque jet d'azote liquide se combinent, à savoir :
- l'effet mécanique du jet, c'est-à-dire l'impact de la pression de l'azote liquide sur le substrat,
- l'effet cryogénique de l'azote à l'état liquide, c'est-à-dire à une température cryogénique typiquement inférieure à -160°C,
- l'effet de « gonflement » ou effet de « souffle » (« *blast effect* » en anglais) engendré par un réchauffement rapide de l'azote liquide au contact de l'air ambiant avec passage de la phase liquide à la phase gazeux qui occupe plus de volume. Ainsi, 1 litre d'azote liquide se vaporise en 700 litres d'azote gazeux.

Dans certaines applications, tel l'écroûtage de béton, c'est principalement l'effet de « souffle » de l'azote liquide qui entre enjeu pour accomplir le travail demandé.

Dans ce cas, chaque jet d'azote liquide « explose » la surface de béton et propulse les constituants du béton dans toutes les directions.

Or, on s'aperçoit, en pratique, qu'après une durée variable d'utilisation, par exemple après quelques heures d'utilisation, les dispositifs de décapage utilisés pour distribuer l'azote liquide perdent de leur efficacité.

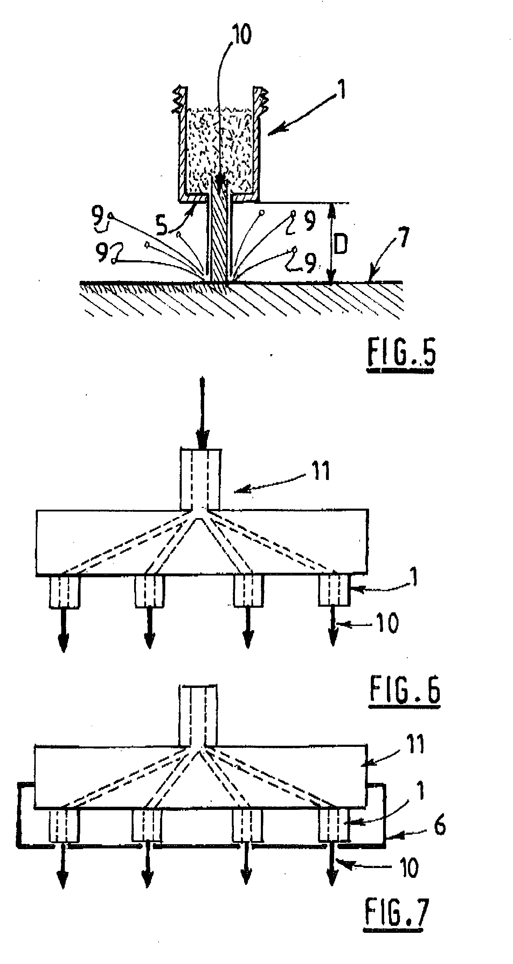

Après investigation, il s'est avéré que leur perte d'efficacité est due à une usure des buses 1 de distribution de l'azote liquide équipant ces dispositifs de décapage, comme montré sur la Figure 6.

En fait, les constituants du béton qui sont détachés par les jets 10 d'azote viennent frapper la ou les buses 1 de distribution des jets d'azote liquide, ce qui provoque leur érosion prématurée.

En d'autres termes, le béton écroûté qui est détaché du substrat sous l'effet du ou des jets d'azote liquide vient détériorer les buses qui sont généralement en acier inoxydable, typiquement un acier inox de nuance 316.

En effet, les inventeurs de la présente invention ont mis en évidence que l'usure prématurée des buses de distribution d'azote liquide est la cause directe de la perte d'efficacité progressive des procédés de décapage ou d'écroûtage puisqu'une buse dégradée éjecte un jet d'azote liquide non cohérent et dispersé, donc moins efficace.

Une solution évidente consisterait à remplacer la ou les buses érodées.

Or, devoir remplacer souvent les buses d'un dispositif de décapage ou d'écroûtage de béton engendre un coût non négligeable et une perte de productivité durant les phases de remplacement et de maintenance des buses du dispositif.

De plus, un tel remplacement de buse n'est pas toujours aisément réalisable, notamment lorsque l'opération de décapage ou écroûtage de béton a lieu dans un milieu où l'intervention humaine est très limitée, voire interdite, et où la maintenance préventive doit être la plus réduite et la plus rapide possible, comme dans certaines enceintes chimiques ou nucléaires.

De là, le problème à résoudre est de pouvoir éviter la baisse d'efficacité des procédés de décapage ou d'écroûtage de béton, sans avoir à remplacer fréquemment les buses du dispositif de décapage ou d'écroûtage mis en oeuvre.

La solution est un procédé de décapage ou d'écroûtage d'une surface en béton par mise en oeuvre d'au moins un jet d'azote liquide à température cryogénique inférieure à -100°C à une pression d'au moins 500 bars, distribué par l'orifice de sortie d'au moins une buse de distribution de jet d'azote liquide, caractérisé en ce qu'au moins une partie de la buse de distribution est protégée par un matériau résistant ayant une dureté d'au moins 7 Mohs.

Selon le cas, le procédé de l'invention peut comprendre l'une ou plusieurs des caractéristiques suivantes :
- ledit matériau résistant a une dureté d'au moins 8 Mohs.
- la buse comporte un revêtement surfacique en ledit matériau résistant déposé extérieurement sur au moins une partie de la paroi de la buse.
- la couche de revêtement a une épaisseur comprise entre 2 et 50 µm, de préférence entre 5 et 20 µm.
- ledit matériau résistant est déposé sur au moins une partie de la paroi externe de la buse dans la région du fond de la buse où débouche l'orifice de sortie.
- la paroi de la buse est réalisée en tout ou en partie en ledit matériau résistant.
- au moins le fond de la buse où débouche l'orifice de sortie est réalisé en ledit matériau résistant.
- la paroi de la buse est protégée par un écran protecteur réalisé, en tout ou en partie, en ledit matériau résistant.
   la paroi de la buse est protégée par un écran protecteur (6) réalisé en acier inoxydable dont l'épaisseur est inférieure à 10 mm, de préférence entre 2 et 6 mm. Cet écran protecteur est suffisamment épais pour pouvoir résister à un temps d'utilisation supérieur à au moins 20 heures sans avoir besoin d'être remplacé.
- le matériau est choisi parmi le carbure de tungstène, le carbure de bore, le nitrure de bore cubique, le carbure de titane, le carbure de silicium, l'alumine et le corindon.
- pendant la distribution du ou des jets d'azote sous pression, la distance D entre le fond de la buse, mesurée au niveau de l'orifice de sortie de la buse, et la surface à décaper est inférieure à 20 mm, de préférence comprise entre 5 et 15 mm, de préférence encore inférieure ou égale à 10 mm.
- l'azote liquide est à une température cryogénique inférieure à -150°C, de préférence entre -155 et -165°C.
- l'azote liquide est à une pression d'au moins 1000 bar, de préférence entre 2800 et 3500 bar.
- on utilise un dispositif de distribution d'azote liquide muni de plusieurs buses délivrant chacune un jet d'azote liquide.
- les buses sont disposées sur une tête de distribution rotative ou oscillante.

L'invention va maintenant être expliquée plus en détail en références aux Figures annexées parmi lesquelles :
- les Figures 1 à 4 proposent des modes de réalisation d'une buse utilisable dans un procédé de décapage ou d'écroûtage selon l'invention,
- la Figure 5 illustre la mise en oeuvre du procédé de décapage ou d'écroûtage selon l'invention,
- la Figure 6 illustre le principe de fonctionnement d'un dispositif de décapage ou d'écroutage selon l'art antérieur, et
- la Figure 7 représente le dispositif de la Figure 6 équipé d'un écran de protection selon le mode de réalisation de la Figure 4.

Selon l'invention, afin d'opérer un décapage ou un écroûtage d'une surface 7 en béton, on utilise un dispositif de distribution d'azote liquide sous pression muni d'une ou de préférentiellement plusieurs buses 1 aptes à et conçues pour délivrer, via leur orifice de sortie 2, chacune un jet d'azote liquide sous très haute pression, c'est-à-dire typiquement à une température de l'ordre de -150°C à -200°C et à une pression comprise entre 1000 et 5000 bar.

Le problème qui se pose est d'éviter ou de minimiser l'usure des buses 1 engendrée par les projections 9 de débris et autres constituants du béton 7, lors du décapage ou de l'écroûtage proprement dit au moyen du ou des jets 10 d'azote liquide, comme illustré en Figure 5, et ce, d'autant plus que, pendant la distribution du ou des jets 10 d'azote liquide sous pression, la distance D entre le fond 5 de la buse 1, mesurée au niveau de l'orifice de sortie 2 de la buse, et la surface 7 à décaper ou à écroûter est généralement inférieure à 20 mm, typiquement comprise entre 5 et 15 mm, et souvent inférieure ou égale à 10 mm.

Pour ce faire, selon l'invention, on protège tout ou partie de la buse 1 de distribution à l'aide d'un matériau résistant ayant une dureté d'au moins 7 Mohs, avantageusement d'au moins 8 Mohs.

A titre d'exemple, le matériau résistant peut être du carbure de tungstène, de bore, de titane ou de silicium, de nitrure de bore cubique, de l'alumine ou du corindon. Dans tous les cas, on utilisera un matériau ayant une dureté supérieure ou égale à celle du béton (entre 7 et 9 Mohs environ) et surtout supérieure à celle de l'acier inoxydable (< 7 Mohs environ) de manière à minimiser l'érosion provoquée par les impacts des débris de béton sur la paroi externe de la ou des buses 1.

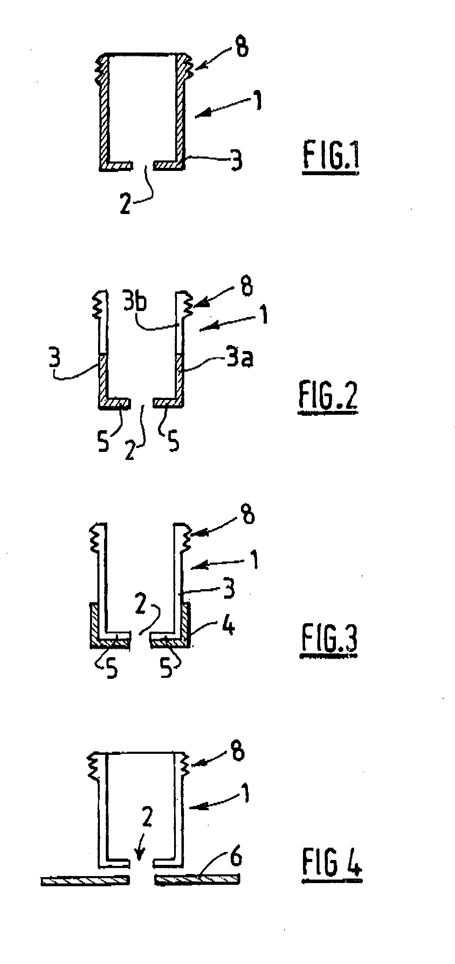

Selon un premier mode de réalisation illustré en Figure 1, la paroi 3 formant la buse 1 peut être entièrement réalisée en ledit matériau résistant.

Selon un deuxième mode de réalisation illustré en Figure 2, seule une partie 3a de la paroi 3 formant la buse 1 peut être réalisée en ledit matériau résistant. Dans ce cas, c'est seulement la partie aval 3a de la buse 1 qui est réalisée en matériau résistant car c'est elle qui est la plus exposée aux projections de débris de béton 7 et à l'usure qui s'ensuit. A l'opposé, sa partie amont 3b, par laquelle la buse 1 est solidarisée au dispositif (non montré), par exemple par vissage 8, peut être réalisée en un matériau moins résistant, tel de l'acier inoxydable.

Selon un troisième mode de réalisation illustré en Figure 3, la buse 1 est protégée par un revêtement surfacique 4 en ledit matériau résistant déposé extérieurement sur au moins une partie de la paroi 3 de la buse 1. Dans ce cas, il est important qu'au moins la région du fond 5 de la buse où débouche l'orifice de sortie 2 soit protégée car c'est, comme déjà dit, la région la plus exposée aux projections de débris de béton. Le reste de la buse 1 peut en revanche être réalisé en un matériau moins résistant, tel que de l'acier inox par exemple. Le dépôt de la couche de revêtement 4 en matériau résistant sur la surface externe de la paroi 4 peut se faire par une technique classique de dépôt, notamment par CVD, PVD, PCVD, PECVD, par électrodéposition, par électrochimie

La couche de revêtement 4 peut avoir une épaisseur comprise entre 5 et 50 µm.

Selon un quatrième mode de réalisation illustré en Figures 4 et 7, la buse 1 peut aussi être protégée par un écran 6 protecteur qui est espacé de la surface externe de la buse 1. Cet écran 6 est muni d'un ou plusieurs orifices de passage de jet pour permettre au ou aux jets d'azote liquide d'être propulsé en direction de la surface 7 à décaper, de préférence des orifices de passages ayant un diamètre inférieure à 1 mm mais supérieur à celui des orifices de sortie 2 des buses 1. Cet écran 6 peut être interchangeable et être donc remplacé dès qu'il est abîmé. Il a par exemple une épaisseur entre 1 et 5 mm. Cet écran 6 peut être lui-même simplement réalisé en partie ou revêtu d'un matériau résistant ou alors être totalement fabriqué en ledit matériau résistant.

## Revendications

1. Procédé de décapage ou d'écroûtage d'une surface en béton par mise en oeuvre d'au moins un jet d'azote liquide à température cryogénique inférieure à -100°C à une pression d'au moins 500 bars, distribué par l'orifice de sortie (2) d'au moins une buse (1) de distribution de jet d'azote liquide, **caractérisé en ce qu'**au moins une partie de la buse (1) de distribution est protégée par un matériau résistant ayant une dureté d'au moins 7 Mohs.

2. Procédé selon la revendication 1, **caractérisé en ce que** ledit matériau résistant a une dureté d'au moins 8 Mohs.

3. Procédé selon l'une des revendications précédentes, **caractérisé en ce que** la buse (1) comporte un revêtement surfacique (4) en ledit matériau résistant déposé extérieurement sur au moins une partie de la paroi (3) de la buse (1).

4. Procédé selon l'une des revendications précédentes, **caractérisé en ce que** ledit matériau résistant est déposé sur au moins une partie de la paroi (3) externe de la buse (1) dans la région du fond (5) de la buse où débouche l'orifice de sortie (2).

5. Procédé selon l'une des revendications 1 ou 2, **caractérisé en ce que** la paroi (3) de la buse (1) est réalisée en tout ou en partie en ledit matériau résistant.

6. Procédé selon la revendication 5, **caractérisé en ce qu'**au moins le fond (3a, 5) de la buse où débouche l'orifice de sortie (2) est réalisé en ledit matériau résistant.

7. Procédé selon l'une des revendications 1 ou 2, **caractérisé en ce que** la paroi (3) de la buse (1) est protégée par un écran protecteur (6) réalisé en ledit matériau résistant ou réalisé en acier inoxydable revêtu dudit matériau résistant.

8. Procédé selon l'une des revendications 1 ou 2, **caractérisé en ce que** la paroi (3) de la buse (1) est protégée par un écran protecteur (6) en acier inoxydable dont l'épaisseur est inférieure à 10 mm.

9. Procédé selon l'une des revendications précédentes, **caractérisé en ce que** le matériau est choisi parmi le carbure de tungstène, le carbure de bore, le carbure de titane, le carbure de silicium, le nitrure de bore cubique, l'alumine et le corindon.

10. Procédé selon l'une des revendications précédentes, **caractérisé en ce que**, pendant la distribution du ou des jets d'azote sous pression, la distance (D) entre le fond (5) de la buse (1) mesurée au niveau de l'orifice de sortie (2) de la buse et la surface à décaper est inférieure à 20 mm, de préférence comprise entre 5 et 15 mm, de préférence encore inférieure ou égale à 10 mm.

## Patentansprüche

1. Verfahren zum Beizen oder zum Schälen einer Oberfläche aus Beton durch Verwendung mindestens eines Strahls flüssigen Stickstoffs mit einer kryogenen Temperatur, die kleiner als -100 °C ist, unter einem Druck von mindestens 500 bar, der durch die Auslassöffnung (2) mindestens einer Düse (1) zum Verteilen des Strahls flüssigen Stickstoffs verteilt wird, **dadurch gekennzeichnet, dass** mindestens ein Teil der Verteilerdüse (1) durch ein widerstandsfähiges Material mit einer Mohs-Härte von mindestens 7 geschützt wird.

2. Verfahren nach Anspruch 1, **dadurch gekennzeichnet, dass** das widerstandsfähige Material eine Mohs-Härte von mindestens 8 hat.

3. Verfahren nach einem der vorhergehenden Ansprüche, **dadurch gekennzeichnet, dass** die Düse (1) eine Oberflächenbeschichtung (4) aus dem widerstandsfähigen Material, das außen an mindestens einem Teil der Wandung (3) der Düse (1) aufgebracht wird, aufweist.

4. Verfahren nach einem der vorhergehenden Ansprüche, **dadurch gekennzeichnet, dass** das widerstandsfähige Material auf mindestens einem Teil der äußeren Wandung (3) der Düse (1) in der Region des Bodens (5) der Düse, wo die Auslassöffnung (2) ausmündet, aufgebracht wird.

5. Verfahren nach einem der Ansprüche 1 oder 2, **dadurch gekennzeichnet, dass** die Wandung (3) der Düse (1) ganz oder teilweise aus dem widerstandsfähigen Material realisiert ist.

6. Verfahren nach Anspruch 5, **dadurch gekennzeichnet, dass** mindestens der Boden (3a, 5) der Düse, wo die Auslassöffnung (2) ausmündet, aus dem widerstandsfähigen Material realisiert ist.

7. Verfahren nach einem der Ansprüche 1 oder 2, **dadurch gekennzeichnet, dass** die Wandung (3) der Düse (1) durch einen Schutzschild (6) geschützt wird, der aus dem widerstandsfähigen Material realisiert ist oder aus rostfreiem Stahl, der mit dem widerstandsfähigen Material beschichtet ist, realisiert ist.

8. Verfahren nach einem der Ansprüche 1 oder 2, **dadurch gekennzeichnet, dass** die Wandung (3) der Düse (1) durch einen Schutzschild (6) aus rostfreiem Stahl, dessen Dicke kleiner als 10 mm ist, geschützt wird.

9. Verfahren nach einem der vorhergehenden Ansprüche, **dadurch gekennzeichnet, dass** das Material aus Wolframcarbid, Borcarbid, Titancarbid, Siliziumcarbid, kubischem Bornitrid, Aluminiumoxid und Korund ausgewählt ist.

10. Verfahren nach einem der vorhergehenden Ansprüche, **dadurch gekennzeichnet, dass**, während der Verteilung des Stickstoffstrahls bzw. der Stickstoffstrahlen unter Druck, der Abstand (D) zwischen dem Boden (5) der Düse (1) gemessen im Bereich der Auslassöffnung (2) der Düse und der zu beizenden Fläche kleiner als 20 mm, bevorzugt zwischen 5 und 15 mm, weiter bevorzugt kleiner oder gleich 10 mm ist.

## Claims

1. Method for blasting or peeling a concrete surface using at least one jet of liquid nitrogen at a cryogenic temperature of less than -100 °C and at a pressure of at least 500 bar, dispensed by the outlet port (2) of at least one nozzle (1) for dispensing the jet of liquid nitrogen, **characterised in that** at least part of the dispensing nozzle (1) is protected by a resistant material having a hardness of at least 7 Mohs.

2. Method according to claim 1, **characterised in that** said resistant material has a hardness of at least 8 Mohs.

3. Method according to any of the preceding claims, **characterised in that** the nozzle (1) has a surface coating (4) of said resistant material deposited on the outside of at least part of the wall (3) of the nozzle (1).

4. Method according to any of the preceding claims, **characterised in that** said resistant material is deposited on at least part of the outer wall (3) of the nozzle (1) in the region of the bottom (5) of the nozzle where the outlet port (2) discharges.

5. Method according to either claim 1 or claim 2, **characterised in that** all or part of the wall (3) of the nozzle (1) is made of said resistant material.

6. Method according to claim 5, **characterised in that** at least the bottom (3a, 5) of the nozzle where the outlet port (2) discharges is made of said resistant material.

7. Method according to either claim 1 or claim 2, **characterised in that** the wall (3) of the nozzle (1) is protected by a protective screen (6) made of said resistant material or made of stainless steel coated with said resistant material.

8. Method according to either claim 1 or claim 2, **characterised in that** the wall (3) of the nozzle (1) is protected by a protective screen (6) made of stainless steel having a thickness of less than 10 mm.

9. Method according to any of the preceding claims, **characterised in that** the material is chosen among tungsten carbide, boron carbide, titanium carbide, silicon carbide, cubic boron nitride, alumina and corundum.

10. Method according to any of the preceding claims, **characterised in that**, during the dispensing of the pressurised jet(s) of nitrogen, the distance (D) between the bottom (5) of the nozzle (1) measured at the outlet port (2) of the nozzle and the surface to be blasted is less than 20 mm, preferably between 5 and 15 mm, particularly preferably less than or equal to 10 mm.
